# EUROPEAN PATENT SPECIFICATION

(11) **EP 2 742 621 B1**
(45) Date of publication and mention of the grant of the patent: **06.04.2016**
(21) Application number: 12865193.2
(22) Date of filing: 10.04.2012
(51) Int. Cl.: H04W 76/04

(54) **REDUCED SIGNALING OVERHEAD DURING RADIO RESOURCE CONTROL (RRC) STATE TRANSITIONS**
REDUZIERTER SIGNAL-OVERHEAD WÄHREND DER STATUSÜBERGÄNGE VON FUNKRESSOURCENSTEUERUNGEN
SURDÉBIT DE SIGNALISATION RÉDUIT AU COURS DE TRANSITIONS ENTRE DES ÉTATS RRC ("RADIO RESOURCE CONTROL")

(30) Priority: 11.08.2011 US 201161522623 P
(43) Date of publication of application: 18.06.2014
(73) Proprietor: Intel Corporation, Santa Clara, CA 95054 (US)
(72) Inventor: GUPTA, Maruti, Portland, Oregon 97201 (US); KOC, Ali, Hillsboro, Oregon 97124 (US); VANNITHAMBY, Rath, Portland, Oregon 97229 (US)
(74) Representative: Hufton, David Alan
(86) International application number: PCT/US2012/032922
(87) International publication number: WO 2013/106060

(56) References cited:
- EP-A1- 2 252 127
- WO-A1-2008/028318
- KR-A- 20100 049 483
- KR-A- 20100 105 449
- KR-A- 20100 137 499
- KR-A- 20110 035 932
- US-A1- 2008 267 061
- US-A1- 2010 111 039
- US-A1- 2010 111 039

## Description

### BACKGROUND

Wireless mobile communication technology uses various standards and protocols to transmit data between a transmission station and a wireless mobile device. Some wireless devices communicate using an orthogonal frequency-division multiplexing (OFDM) digital modulation scheme via a physical layer. OFDM standards and protocols can include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi. In 3GPP radio access networks (RANs) in LTE systems, the transmission station can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs) in an E-UTRAN, which communicates with the wireless mobile device, known as a user equipment (UE). A downlink (DL) transmission can be a communication from the transmission station (or eNodeB) to the wireless mobile device (or UE), and an uplink (UL) transmission can be a communication from the wireless mobile device to the transmission station.

In a LTE network, each time a UE initiates communication with an eNodeB or the eNodeB initiates communication with the UE, signaling can be used to setup the communication. The signaling can use a control plane protocol, such as radio resource control (RRC) signaling, to establish a connection between the UE and the eNodeB.

Reference is made to US 2010/0111039 A1, which discloses a method and apparatus configured to control a discontinuous reception (DRX) in a mobile communication system. The method includes: interrupting the DRX operation when a radio resource control (RRC) connection reestablishment procedure is initiated; transmitting an RRC connection reestablishment request message from the user equipment to an evolved node B(ENB); receiving an RRC connection reestablishment message form the ENB to the user equipment; and resuming, if the received RRC connection reestablishment message contains new DRX setting information, the interrupted DRX operation according to the new DRX setting information. The DRX operation can be interrupted or resumed at a proper time point when an RRC connection is reestablished or reconfigured or a handover is performed, thereby reducing power consumption in the user equipment.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates an example process for reducing signaling overhead during radio resource control (RRC) state transitions in accordance with an example;
FIG. 2 depicts a flow chart for reducing signaling overhead during radio resource control (RRC) state transitions in accordance with an example;
FIG. 3 depicts a flow chart of instructions for reducing signaling overhead during radio resource control (RRC) state transitions in accordance with an example;
FIG. 4 depicts a flow chart of instructions for reducing signaling overhead during radio resource control (RRC) state transitions in accordance with an example;
FIG. 5 illustrates a block diagram of a radio resource controller in accordance with an example; and
FIG. 6 illustrates a diagram of a wireless device in accordance with an example.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Wireless communication between a mobile device and a transmission station can be subdivided into various sections referred to as layers. In the LTE system, communication layers can include the physical (PHY), media access control (MAC), radio link control (RLC) or logic, packet data convergence protocol (PDCP), and radio resource control (RRC) layers. The physical layer can include the hardware transmission components and software modules of a wireless communication system. The RRC layer can control the configuration of the MAC layer.

The RRC protocol can manage control plane signaling between a mobile device (e.g., a user equipment (UE)) and a radio access network (RAN) via a transmission station (e.g., an eNB). The RRC protocol can include functions for connection establishment and release, broadcast of system information, radio bearer establishment/reconfiguration and release, RRC connection mobility procedures, paging notification and release, and/or outer loop power control. In an example, one RRC connection may be open to the mobile device at any one time.

Excessive signaling overhead can generate additional network congestion on a broadband mobile network, such as a 4G Long Term Evolution (LTE) network. The excessive signaling can occur due to frequent radio resource state change events which can cause a mobile device (e.g., a wireless device) to repeatedly move from an idle state to a connected state. The frequent changes can occur due to various traffic activity patterns of users using mobile devices, such as smart phones and tablets. The various traffic activity patterns can include users accessing the internet in frequent short bursts or sporadic bursts. The method and system disclosed can reduce the signaling overhead of RRC state change events (e.g., reduce signaling during radio resource control (RRC) state transitions).

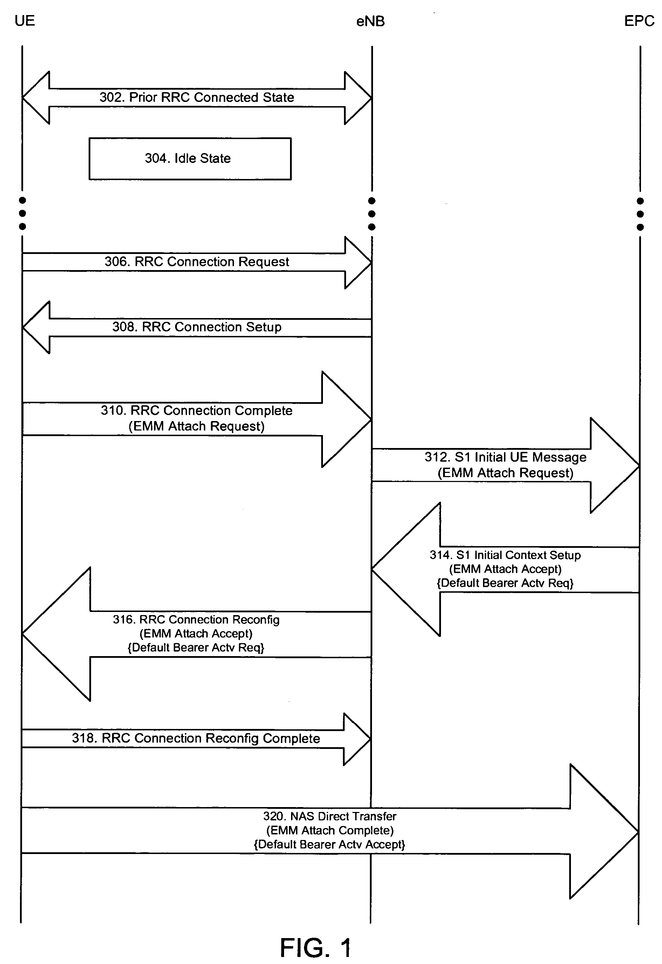

FIG. 1 illustrates an example of a signaling message exchange when the mobile device (e.g., UE) connects to the RAN (e.g., a LTE network) via a transmission station (e.g., eNB). The RAN can provide connectivity between a core network (CN) (e.g., an evolved packet core (EPC)) and the mobile device. When the mobile device first connects to the RAN, the mobile device can be in an idle state 304 (e.g., a RRC_Idle state). Either the mobile device (e.g., UE) or a transmission station (e.g., eNB) can trigger a connection request. FIG. 1 illustrates the mobile device initiating a RRC connection request 306 (e.g., RRC_Connection_Request). The transmission station can reply to the mobile device with a RRC connection setup 308 message (e.g., RRC_Connection_Setup). The mobile device can answer the transmission station with a RRC connection complete 310 message (e.g., RRC_Connection_Complete), which can include an evolved packet system (EPS) mobility management (EMM) attachment request for the EPC.

The transmission station can connect to the EPC to set up requisite information in a back-bone network. The transmission station can send an initialization request message (e.g., S1 initial UE message 312) including the EMM attachment request to the EPC. The EPC can reply to the transmission station with an initialization setup message (e.g., S1 initial context message 314), which can include an EMM attachment accepted message. The EMM attachment accepted message can include a default bearer activation request.

The transmission station can send a RRC connection reconfiguration 316 message (e.g., RRC_Connection_Reconfig) along with the EMM attachment accepted message from the EPC to the mobile device. The mobile device can answer the transmission station with a RRC connection reconfiguration complete 318 message (e.g., RRC_Connection_Reconfig_Complete). The mobile device can send a non-access stratum (NAS) direct transfer message 320 to the EPC. The non-access stratum (NAS) can comprise protocols which can operate between the mobile device and the Core Network (CN). The NAS direct transfer message can include an EMM attachment complete message, which can include a default bearer activation accepted message. The mobile device can end up sending the RRC connection reconfiguration complete message to the transmission station and the attachment complete message to the EPC, which can piggy-back over the RRC connection reconfiguration complete message.

The connection messages (e.g., RRC connection messages) can contain various parameters which do not change very frequently over time, particularly if the mobile device is connecting to the same transmission station, where the mobile device location remains within the same cell. The various RRC parameters of the RRC connection message can include a size and a frequency of a buffer status report (BSR), discontinuous reception (DRX) parameters, a frequency of channel quality indicator (CQI) feedback, a signaling radio bearer and/or signaling resource bearer (SRB0, SRB1, SRB2, SRB3) information. As a result, if the mobile device is connecting repeatedly (e.g., frequent short bursts or cycling between an idle state and a connected state) to the same network, the mobile device may not need to receive the same information repeatedly provided by the connection messages. The RRC connection messages typically can include an entire set of parameters used for network set-up, even if the parameters have been used previously and the parameters are relatively constant. When the RRC connection messages are used, the mobile device or the transmission station may not retain information related to a prior connection (e.g., a prior RRC state transition). Reducing the number of parameters sent in the RRC connection messages can reduce the control signaling overhead on the broadband mobile network and ease network congestion.

To reduce signaling overhead during RRC state transitions, in an example, a wireless device (e.g., the mobile device or the transmission station) receiving a reduced RRC connection message can include a memory and a timer. The wireless device (e.g., a first wireless device) can save a selected RRC parameter in a memory. The selected RRC parameter may be obtained from a prior RRC connection message used to connect the mobile device with the transmission station in a prior RRC connected state 302 (FIG. 1). The selected RRC parameter can be identified based on a reduced frequency (e.g., low frequency) at which the selected RRC parameter changes. The selected RRC parameter may be a relatively constant parameter, a stable parameter, a non-transitory parameter, a semi-permanent parameter, or permanent parameter.

The first wireless device can set an RRC resource parameter retention timer to count a retention time duration for using the selected RRC parameter saved in the memory. The first wireless device can receive a reduced RRC connection message from a second wireless device. The reduced RRC connection message can exclude at least one selected RRC parameter. The first wireless device can use the selected RRC parameter saved in the memory for the corresponding RRC parameter that was excluded in the reduced RRC connection message when the RRC resource parameter retention timer is not expired. The selected RRC parameter can be used in a RRC connection protocol. The reduced RRC connection message can have fewer parameters than the RRC connection message while providing similar RRC connectivity, thus reducing the bandwidth for control messages on the broadband mobile network.

In another example, the wireless device (e.g., the mobile device or the transmission station) transmitting the reduced RRC connection message can include a memory and a timer. The first wireless device can save a selected RRC parameter in a memory. The selected RRC parameter may be obtained from a prior RRC connection message used to connect the mobile device with the transmission station. The selected RRC parameter can be identified based on a reduced frequency in which the selected RRC parameter changes as compared to how often the RRC parameter is being sent. The first wireless device can set an RRC resource parameter retention timer to count a retention time duration for using the selected RRC parameter saved in the memory. The first wireless device can transmit a reduced RRC connection message to a second wireless device when the RRC resource parameter retention timer is not expired. The reduced RRC connection message excludes the selected RRC parameter.

In another example, the transmission station may include a timer and no memory for saving the selected RRC parameter, because the transmission station may be able to generate, reconstruct, or recreate the RRC parameters, including the selected parameter, from other information available to the transmission station prior to the connection messages.

The following discussion provides additional details for the examples. RRC connection establishment can be used to make the transition from a RRC idle mode to a RRC connected mode. The mobile device makes the transition to RRC connected mode before transferring application data, or completing other signaling procedures. The RRC connection establishment procedure can be initiated by the mobile device, but either the mobile device or the RAN (including the transmission station) may trigger an RRC connection establishment. For example, the mobile device can trigger RRC connection establishment when an end-user starts an application to browse the internet, or sends an email. Similarly, the mobile device can trigger RRC connection establishment when the UE moves into a new tracking area or completes a tracking area update signaling procedure. The RAN can trigger the RRC connection establishment procedure by sending a paging message, which can be used to allow the delivery of an incoming short message service (SMS) message (e.g., text message) or to notify of an incoming voice call or internet protocol (IP) packet.

The RRC connection establishment can configure the signaling radio bearer (SRB) 1 (and other SRBs) and can allow subsequent signaling to use a dedicated control channel (DCCH) rather than a common control channel (CCCH) used by SRB0. The RRC connection request message can be sent as part of a random access procedure. The RRC connection request message can correspond to an initial layer 3 (RCC layer or transport channel) message which can be transferred using the SRB0 on the CCCH because neither SRB1 nor a DCCH may have been setup yet.

In an example, both the mobile device (e.g., UE) and the transmission station (e.g., eNB) can include a timer, which can be referred to as a RRC resource parameter retention timer or a RRC_Params_Resource_Retain_timer, which can retain a RRC_Params_Resource_Retain_time (e.g., a timer value). The timer can allow the mobile device and transmission station to retain information exchanged during a network entry for a length of time indicated by a timer value. The timer value can be as short as a few seconds to as long as a couple of days. In another example, the timer value can be one minute to four hours. If the mobile device connects to the network after the expiration of the timer, the information can be flushed or cleared from memory (or alternatively, ignored in memory) by both the mobile device and transmission station. After the expiration of the timer, the transmission station or the core network can again refresh the connection message parameters in a full RRC connection message, including the selected RRC parameter excluded in the reduce connection messages. If the mobile device connects to the transmission station before the timer expires, the network can determine the parameters to be refreshed and send those parameters to the mobile device. In an example, the timer value can be set by the transmission station, and the timer value can be communicated to the mobile device as one of the parameters during the network entry process, such as in RRC reconfiguration setup message.

In another example, the transmission station can determine which parameters (e.g., the selected RRC parameters) to omit or exclude and which parameters to send (RRC parameters included in the reduced RRC connection message). Some information and parameters (e.g., discontinuous reception parameters, buffer status reports, SRB0, SRB1, SRB2, and SRB3) can remain fairly constant and may be set to a same initial value between connected states, and these parameters can be selected as RRC parameters to exclude from a reduced RRC connection message. The type of information and parameters in the RRC connection message that can change during a connected state or between connected states can be related to channel conditions, such as indicated by CQI feedback. Although, the DRX, the size and frequency of the BSR, SRB0, SRB1, SRB2, SRB3 parameters are specifically listed as selected RRC parameters that may be excluded from the reduced RRC connection message, other parameters in a mobile networking standard may also be excluded from the reduced RRC connection message if the parameter has a low frequency of change relative to the cycling of the RRC state transitions. The selected parameters can be determined from a specification, such as the 3GPP specification, based on low frequency of change, thus substantially reducing the size of RRC messages. In an example, the reduced RRC connection message can be renamed, such as reduced_RRC_Connection_Request, reduced_RRC_Connection_Setup, and reduced_RRC_Connection_Complete, to distinguish the reduced RRC connection messages from the RRC connection messages. If the mobile device does not support a reduced connection message setup, the mobile device can use the RRC connection messages instead of the reduced RRC connection messages, so method and system disclosed can be backward compatible with older mobile devices without a timer or memory for reducing signaling overhead. Transmitting reduced RRC connection messages can save valuable bandwidth over an air-interface and reduce processing overhead at the mobile device.

The selected RRC parameters can include a discontinuous reception (DRX) parameter, a size and frequency of a buffer status report (BSR), signaling radio bearer (SRB). The signaling radio bearers can include SRB0, SRB1, SRB2, SRB3, or SRB4. The following provides additional details on the selected RRC parameters. The SRB0 can be used for RRC messaging using the common control channel (CCCH) logical channel. Information on the SRB0 may not be encrypted (in the RLC layer or the MAC layer). The SRB1, SRB2, SRB3, and SRB4 may be used on the dedicated control channel (DCCH), when DCCH's are setup. The SRB1 can be a low priority signaling (message) bearer for transmitting non-access stratum (NAS) messages over the DCCH logical channel. The SRB2 can be a higher priority signaling (message) bearer transmitted over DCCH logical channel. The SRB3 and SRB4 can be used to transfer piggybacked NAS-messages between the mobile device and the transmission station. A data radio bearer (DRB) can be a bearer for internet protocol (IP) packets. Part of a bearer establishment procedure, including SRBs, can include authentication and activation of encryption.

The buffer status report (BSR) can be sent in an uplink from a mobile device to a transmission to report pending data in uplink buffers. Because a scheduling request (SR) procedure may convey little detail about the mobile device resource requirements, the BSR with more detailed information about the amount of data waiting in the BSR can be attached to the first uplink transmission following the SR procedure. The mobile device can send BSRs for active radio bearers. Based on the BSRs, the transmission station can ensure that mobile devices with high priority data are prioritized and obtain the assigned quality of service (QoS) characteristics.

The discontinuous reception (DRX) mechanism allows the mobile device to switch off mobile device transmitter periodically to conserve battery power. The activity and switch-off time can be set by the transmission station based on the QoS of the connection and current activity of the mobile device. The DRX cycle can range from a few milliseconds up to several seconds. The DRX cycle can be as long as the paging cycle when the mobile device does not have a radio bearer.

In another embodiment, the mobile device or transmission station can determine whether to use the reduced RRC connection messages instead of the RRC connection messages, based on a mobile device's location. When the mobile device's location changes significantly, the selected RRC parameter can be more likely to change, thus fewer selected RRC parameters, if any, may be excluded from the reduced RRC connection message. A significant change can include a mobile device moving into a different cell or communicating with a different transmission station. In an example, the wireless device may store a starting mobile device location in memory when the selected RRC parameter is stored in a memory. The mobile device may update a current mobile device location while in a connected state. The starting mobile device location and/or the current mobile device location may be transmitted to the transmission station. The wireless device (e.g., the mobile device or the transmission station) can store the starting mobile device location and/or the current mobile device location station in memory for comparison to later detected locations.

In another example, the mobile device may include a location tracking mechanism or module for tracking the current mobile device location (e.g., a change in location of the mobile device) during an idle state without a connection to the RAN. The location tracking mechanism can include an accelerometer, an inertial measurement unit (IMU), a location sensor, and/or a connection with a GPS receiver. In another example, the location tracking mechanism may use a separate local area network (LAN) connection to determine the current mobile device location. In another example, the wireless device may store a starting mobile device location in memory when the selected RRC parameter is stored in a memory. When the mobile device moves a predetermined or specified distance from the starting mobile device location, the wireless device may generate an expired condition on the RRC resource parameter retention timer (or otherwise cause the RRC connection message to be used instead of the reduced RRC connection message), indicating that at least one of the selected RRC parameters may have changed. If the mobile device is located close to the starting mobile device location (or a previous location) when granted network entry using the full RRC connection message, then the parameters or information used to gain access to the network can be utilized for a faster connection to the network. In another example, the wireless device may use the mobile device current location relative to the mobile device starting location, the RRC resource parameter retention timer, or combination of the timer and the locations to determine when the reduced RRC connection message is used instead of the RRC connection message.

In another example, an adjusted transmit power level may also be saved with the selected RRC parameters. When a connection is established between the mobile device and transmission station (or as part of the connection establishment), a transmit power level for the mobile device may be determined or iterated through various signaling messages until a suitable (or optimal) transmit power level is determined. The signaling messages used for determining the suitable transmit power level can add to the signaling overhead of the RAN. The transmit power level may be determined with each connection establishment, adding to the signaling overhead of the RAN. The suitable transmit power level can balance conserving power of the mobile device with a high transmission bandwidth (determined by a CQI, a preceding matrix indicator (PMI), a transmission rank indicator (RI), or other data transmission indicators that can be used to determine a signal to interference plus noise ratio (SINR)). The transmit power can vary based on the location of the mobile device to the transmission station, interference, and other factors affect signal power and quality. Once the suitable transmit power level is determined for a mobile device at a location, the suitable transmit power level (e.g., the adjusted transmit power level) can be reused in subsequent connections because the later transmit power level can be substantially similar to the earlier determined suitable transmit power level. If the adjusted transmit power level is saved in memory for the retention time duration or until the current mobile device location exceeds a specified distance from the starting mobile device location, the signaling messages for the transmit power level adjustment can be reduced, thus decreasing the signaling overhead. The saved adjusted transmit power level can also be used as a starting value to fine tune the suitable transmit power level.

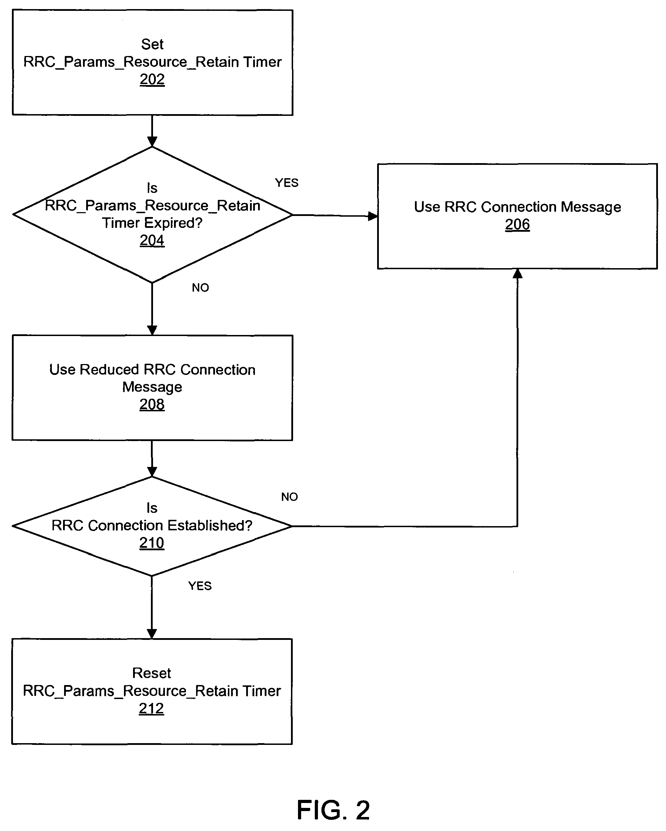

FIG. 2 illustrates a method and system for reducing signaling overhead during radio resource control (RRC) state transitions, which method may be executed on a state machine or as instructions on a machine, where the instructions are included on at least one computer readable medium. The wireless device can set a RRC_Params_Resource_Retain timer 202 to a retention time duration for using a selected RRC parameter saved in a memory. When a RRC connection is initiated (e.g., a message generated or a message received) the wireless device can determine if the RRC_Params_Resource_Retain timer expired 204. If the RRC_Params_Resource_Retain timer is expired, the wireless device can use the RRC connection message 206. If the RRC_Params_Resource_Retain timer is not expired, the wireless device can use the reduced RRC connection message 208. If an RRC connection is established 210 using the reduced RRC connection message, the wireless device can reset the RRC_Params_Resource_Retain timer 212. If an RRC connection is not established using the reduced RRC connection message, the wireless device can use (e.g., re-transmit) using the full RRC connection message. In another example, if the wireless device receives the reduced RRC connection message after the RRC_Params_Resource_Retain timer expires, the wireless device may use the parameters in the reduced RRC connection message, and the wireless device may instruct the second wireless device to send a full RRC connection message in a subsequent communication or transmit a response with a full RRC connection message. In another example, if the wireless device receives the reduced RRC connection message after the RRC_Params_Resource_Retain timer expires; the wireless device may fail the RRC establishment or send a negative acknowledgement (NACK).

The method and system for reducing signaling overhead during RRC state transitions can re-use information from recent previous connections, which can be saved in memory, instead of resending known or saved information. The method and system can re-use information already given to the mobile device, thus speeding up the process of the mobile device's entry into the network and can reduce the signaling overhead of RRC state change from RRC_Idle to RRC_Connected.

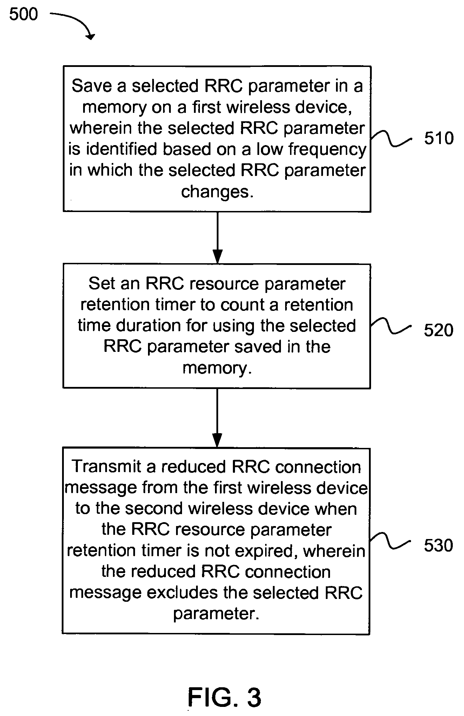

Another example provides a method 500 for reducing signaling overhead during radio resource control (RRC) state transitions, as shown in the flow chart in FIG. 3. The method may be executed as instructions on a machine, where the instructions are included on at least one computer readable medium. The method includes the operation of saving a selected RRC parameter in a memory on a first wireless device, wherein the selected RRC parameter is identified based on a low frequency in which the selected RRC parameter changes, as in block 510. The operation of setting an RRC resource parameter retention timer to count a retention time duration for using the selected RRC parameter saved in the memory follows, as in block 520. The next operation of the method can be transmitting a reduced RRC connection message from the first wireless device to a second wireless device when the RRC resource parameter retention timer is not expired, wherein the reduced RRC connection message excludes the selected RRC parameter, as in block 530.

The selected RRC parameter can be obtained from a prior RRC connection message used to connect the first wireless device with the second wireless device. The prior RRC connection message can be generated by the first wireless device for communication with the second wireless device. In another example, the prior RRC connection message can be received by the first wireless device from the second wireless device. An idle state can occur on the first wireless device in communication with the second wireless device between the instruction to save the selected RRC parameter in the memory and the instruction to transmit the reduced RRC connection message.

The method can further include the first wireless device resetting the RRC resource parameter retention timer after an RRC connection. In another example, the method can further include the first wireless device transmitting the retention time duration to the second wireless device. The selected RRC parameter can include a discontinuous reception (DRX) parameter, a size of a buffer status report (BSR), a frequency of the BSR, signaling radio bearer (SRB) 0, SRB1 information, SRB2 information, SRB3 information, an adjusted transmit power level, or combinations of these selected RRC parameters. The reduced RRC connection message and the RRC connection message can include an RRC connection request, an RRC connection setup, an RRC connection setup complete, an RRC connection reconfig, an RRC connection reconfig complete, or combinations of these connection messages. The first wireless device can include a user equipment (UE) or a mobile station (MS). The first wireless device can be configured to connect to at least one of a wireless local area network (WLAN), a wireless personal area network (WPAN), and a wireless wide area network (WWAN). The first wireless device can include an antenna, a touch sensitive display screen, a speaker, a microphone, a graphics processor, an application processor, internal memory, a non-volatile memory port, or combinations of these components. The second wireless device can include an evolved Node B (eNodeB), a base station (BS), a macro evolved Node B (macro-eNB), a low power node (LPN), a micro-eNB, a pico-eNB, a femto-eNB, a home eNB (HeNB), a base band unit (BBU), a remote radio head (RRH), a remote radio equipment (RRE), or a remote radio unit (RRU).

In another example, the method can further include the first wireless device receiving a second RRC connection message from the second wireless device before the expiration of the RRC resource parameter retention timer. The selected RRC parameter of the second RRC connection message can have a different value than the selected RRC parameter saved in the memory. The first wireless device can replace the selected RRC parameter saved in the memory with the selected RRC parameter of the second RRC connection message. In another example, the reduced RRC connection message can further exclude a plurality of selected RRC parameters. Transmitting the reduced RRC connection message from the first wireless device to the second wireless device can further include an included selected RRC parameter in the reduced RRC connection message when the included selected RRC parameter changes, where at least one other selected RRC parameter is excluded from the reduced RRC connection message.

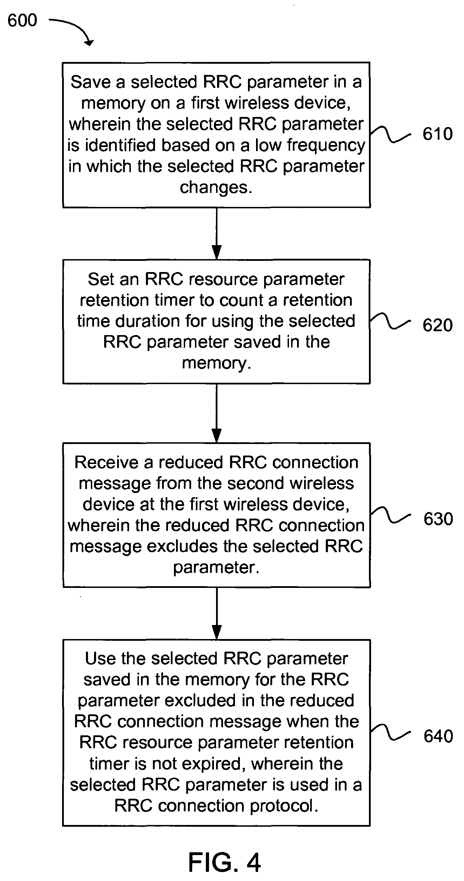

Another example provides a method 600 for reducing signaling overhead during radio resource control (RRC) state transitions, as shown in the flow chart in FIG. 4. The method may be executed as instructions on a machine, where the instructions are included on at least one computer readable medium. The method includes the operation of saving a selected RRC parameter in a memory on a first wireless device, wherein the selected RRC parameter is identified based on a low frequency in which the selected RRC parameter changes, as in block 610. The operation of setting an RRC resource parameter retention timer to count a retention time duration for using the selected RRC parameter saved in the memory follows, as in block 620. The next operation of the method can be receiving a reduced RRC connection message from a second wireless device at the first wireless device, wherein the reduced RRC connection message excludes the selected RRC parameter, as in block 630. The method further includes using the selected RRC parameter saved in the memory for the RRC parameter excluded in the reduced RRC connection message when the RRC resource parameter retention timer is not expired, wherein the selected RRC parameter is used in a RRC connection protocol, as in block 640.

The selected RRC parameter can be obtained from a prior RRC connection message used to connect the first wireless device with the second wireless device. The prior RRC connection message can be generated by the first wireless device for communication with the second wireless device. In another example, the prior RRC connection message can be received by the first wireless device from the second wireless device. An idle state can occur on the first wireless device in communication with the second wireless device between the instruction to save the selected RRC parameter in the memory and the instruction to transmit the reduced RRC connection message.

The method can further include the first wireless device resetting the RRC resource parameter retention timer after an RRC connection. In another example, the method can further include the first wireless device receiving the retention time duration from the second wireless device. The selected RRC parameter can include a discontinuous reception (DRX) parameter, a size of a buffer status report (BSR), a frequency of the BSR, signaling radio bearer (SRB) 0, SRB1 information, SRB2 information, SRB3 information, an adjusted transmit power level, or combinations of these selected RRC parameters. The reduced RRC connection message and the RRC connection message can include an RRC connection request, an RRC connection setup, an RRC connection setup complete, an RRC connection reconfig, an RRC connection reconfig complete, or combinations of these connection messages. The first wireless device can include a user equipment (UE) or a mobile station (MS). The second wireless device can include an evolved Node B (eNodeB), a base station (BS), a macro evolved Node B (macro-eNB), a low power node (LPN), a micro-eNB, a pico-eNB, a femto-eNB, a home eNB (HeNB), a base band unit (BBU), a remote radio head (RRH), a remote radio equipment (RRE), or a remote radio unit (RRU). In another example, the method can further include the first wireless device transmitting an RRC connection failed message from the first wireless device to the second wireless device when the reduced RRC connection message is received and the RRC resource parameter retention timer is expired.

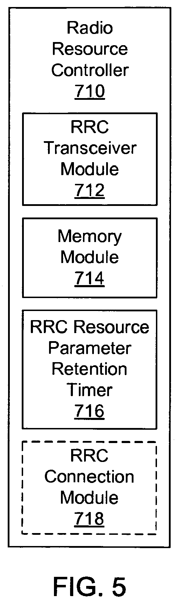

FIG. 5 illustrates an example radio resource controller 710 for reducing signaling overhead during radio resource control (RRC) state transitions. The radio resource controller can be included a first wireless device, a second wireless device, a mobile device, or a transmission station. The first and second wireless devices can include a mobile device or a transmission station. The mobile device can include a user equipment (UE) and a mobile station (MS). The transmission station can include a node, an evolved Node B (eNodeB), a base station (BS), a macro evolved Node B (macro-eNB), a low power node (LPN), a micro-eNB, a pico-eNB, a femto-eNB, a home eNB (HeNB), a base band unit (BBU), a remote radio head (RRH), a remote radio equipment (RRE), a remote radio unit (RRU).

The radio resource controller 710 can include a RRC transceiver module 712, a memory module 714, a RRC resource parameter retention timer 716. The radio resource controller may also include a RRC connection module 718 and a location tracking module (not shown). The location tracking module can be configured generate the starting mobile device location and/or the current mobile device location station. The RRC transceiver module can be configured to obtain a selected RRC parameter from an RRC connection message used to connect a first wireless device with a second wireless device. The selected RRC parameter can be identified based on a low frequency in which the selected RRC parameter changes. The memory module can be configured to save the selected RRC parameter. The RRC resource parameter retention timer can be configured to count a retention time duration for using the selected RRC parameter saved in the memory. The RRC transceiver module can be further configured to generate a reduced RRC connection message for communication between the first wireless device and the second wireless device when the RRC resource parameter retention timer is not expired. The reduced RRC connection message can exclude the selected RRC parameter.

In an example, the RRC resource parameter retention timer 716 can be further configured to reset the RRC resource parameter retention timer after an RRC connection. The RRC transceiver module 712 can be further configured to transmit the retention time duration to the second wireless device. The selected RRC parameter can include a discontinuous reception (DRX) parameter, a size of a buffer status report (BSR), a frequency of the BSR, signaling radio bearer (SRB) 0, SRB1 information, SRB2 information, SRB3 information, an adjusted transmit power level, or combinations of these selected RRC parameters. The reduced RRC connection message and the RRC connection message can include an RRC connection request, an RRC connection setup, an RRC connection setup complete, an RRC connection reconfig, an RRC connection reconfig complete, or combinations of these connection messages.

In another example, the RRC transceiver module 712 of the radio resource controller 710 can be configured to obtain a selected RRC parameter from an RRC connection message used to connect a first wireless device with a second wireless device. The selected RRC parameter can be identified based on a low frequency in which the selected RRC parameter changes. The memory module 714 can be configured to save the selected RRC parameter. The RRC resource parameter retention timer 716 can be configured to count a retention time duration for using the selected RRC parameter saved in the memory. The RRC transceiver module can be further configured to receive a reduced RRC connection message from the second wireless device at the first wireless device. The reduced RRC connection message can exclude the selected RRC parameter. The RRC connection module can be configured to use the selected RRC parameter saved in the memory for the RRC parameter excluded in the reduced RRC connection message when the RRC resource parameter retention timer is not expired. The selected RRC parameter can be used in a RRC connection protocol.

In an example, the RRC resource parameter retention timer 716 can be further configured to reset the RRC resource parameter retention timer after an RRC connection. The RRC transceiver module 712 can be further configured to transmit the retention time duration to the second wireless device. The selected RRC parameter can include a discontinuous reception (DRX) parameter, a size of a buffer status report (BSR), a frequency of the BSR, signaling radio bearer two (SRB2) information, SRB3 information, an adjusted transmit power level, or combinations of these selected RRC parameters. The reduced RRC connection message and the RRC connection message can include an RRC connection request, an RRC connection setup, an RRC connection setup complete, an RRC connection reconfig, an RRC connection reconfig complete, or combinations of these connection messages.

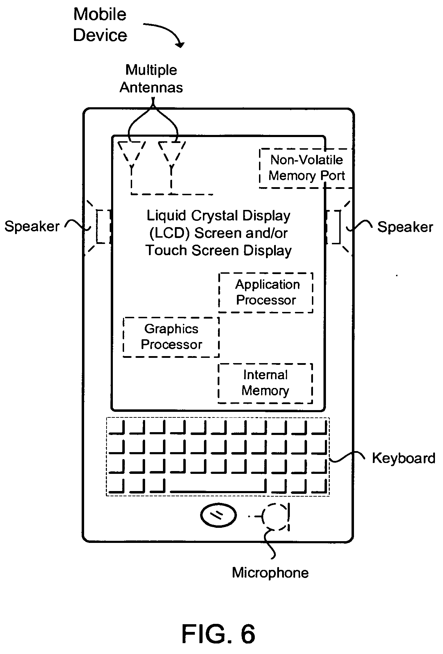

In another example, the first wireless device and the second wireless device can include a transmission station or a mobile device. The transmission station can be in wireless communication with the mobile device. FIG. 6 provides an example illustration of the mobile device, such as a user equipment (UE), a mobile station (MS), a mobile wireless device, a mobile communication device, a tablet, a handset, or other type of mobile wireless device. The mobile device can include one or more antennas configured to communicate with transmission station, such as a base station (BS), an evolved Node B (eNB), a base band unit (BBU), a remote radio head (RRH), a remote radio equipment (RRE), a relay station (RS), a radio equipment (RE), or other type of wireless wide area network (WWAN) access point. The mobile device can be configured to communicate using at least one wireless communication standard including 3GPP LTE, WiMAX, High Speed Packet Access (HSPA), Bluetooth, and WiFi. The mobile device can communicate using separate antennas for each wireless communication standard or shared antennas for multiple wireless communication standards. The mobile device can communicate in a wireless local area network (WLAN), a wireless personal area network (WPAN), and/or a WWAN.

FIG. 6 also provides an illustration of a microphone and one or more speakers that can be used for audio input and output from the mobile device. The display screen may be a liquid crystal display (LCD) screen, or other type of display screen such as an organic light emitting diode (OLED) display. The display screen can be configured as a touch screen. The touch screen may use capacitive, resistive, or another type of touch screen technology. An application processor and a graphics processor can be coupled to internal memory to provide processing and display capabilities. A non-volatile memory port can also be used to provide data input/output options to a user. The non-volatile memory port may also be used to expand the memory capabilities of the mobile device. A keyboard may be integrated with the mobile device or wirelessly connected to the mobile device to provide additional user input. A virtual keyboard may also be provided using the touch screen.

Various techniques, or certain aspects or portions thereof, may take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, EPROM, flash drive, optical drive, magnetic hard drive, or other medium for storing electronic data. The base station and mobile station may also include a transceiver module, a counter module, a processing module, and/or a clock module or timer module. One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" means that a particular feature, structure, or characteristic described in connection with the example is included in at least one embodiment of the present invention. Thus, appearances of the phrases "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A computer program comprising a computer program code means adapted to perform a method (500) for reducing signaling overhead during radio resource control (RRC) state transitions, comprising:
saving a selected RRC parameter in a memory on a first wireless device, wherein the selected RRC parameter is identified based on a low frequency in which the selected RRC parameter changes (510);
setting an RRC resource parameter retention timer to count a retention time duration for using the selected RRC parameter saved in the memory (520); and
transmitting a reduced RRC connection message from the first wireless device to a second wireless device when the RRC resource parameter retention timer is not expired, wherein the reduced RRC connection message excludes the selected RRC parameter (530).

2. A computer program comprising a computer program code means adapted to perform a method (600) for reducing signaling overhead during radio resource control (RRC) state transitions, comprising:
saving a selected RRC parameter in a memory on a first wireless device, wherein the selected RRC parameter is identified based on a low frequency in which the selected RRC parameter changes (610);
setting an RRC resource parameter retention timer to count a retention time duration for using the selected RRC parameter saved in the memory (620); and
receiving a reduced RRC connection message from a second wireless device at the first wireless device, wherein the reduced RRC connection message excludes the selected RRC parameter (630);
using the selected RRC parameter saved in the memory for the RRC parameter excluded in the reduced RRC connection message when the RRC resource parameter retention timer is not expired, wherein the selected RRC parameter is used in a RRC connection protocol (640).

3. The computer program of claim 1 or 2, wherein the selected RRC parameter is obtained from a prior RRC connection message used to connect the first wireless device with the second wireless device.

4. The computer program of claim 3, wherein:
the prior RRC connection message is generated by the first wireless device for communication with the second wireless device; or
the prior RRC connection message is received by the first wireless device from the second wireless device.

5. The computer program of claim 1 or 2, wherein an idle state occurs on the first wireless device in communication with the second wireless device between the instruction to save the selected RRC parameter in the memory and the instruction to transmit the reduced RRC connection message.

6. The computer program of claim 1 or 2, further comprising:
resetting the RRC resource parameter retention timer after an RRC connection (212).

7. The computer program of claim 1, further comprising:
transmitting the retention time duration to the second wireless device.

8. The computer program of claim 2, further comprising:
receiving the retention time duration from the second wireless device.

9. The computer program of claim 1 or 2, wherein:
the selected RRC parameter is selected from the group consisting of a discontinuous reception (DRX) parameter, a size of a buffer status report (BSR), a frequency of the BSR, signaling radio bearer 0 (SRBO) information, SRB1 information, SRB2 information, SRB3 information, or an adjusted transmit power level; or
the reduced RRC connection message and the RRC connection message are selected from the group consisting of an RRC connection request, an RRC connection setup, an RRC connection setup complete, an RRC connection reconfig, or an RRC connection reconfig complete.

10. The computer program of claim 1 or 2, wherein the first wireless device is selected from the group consisting of a user equipment (UE) and a mobile station (MS), wherein the first wireless device is configured to connect to at least one of a wireless local area network (WLAN), a wireless personal area network (WPAN), and a wireless wide area network (WWAN), and wherein the first wireless device includes an antenna, a touch sensitive display screen, a speaker, a microphone, a graphics processor, an application processor, internal memory, or a non-volatile memory port, and the second wireless device is selected from the group consisting of an evolved Node B (eNodeB), a base station (BS), a macro evolved Node B (macro-eNB), a low power node (LPN), a micro-eNB, a pico-eNB, a femto-eNB, a home eNB (HeNB), a base band unit (BBU), a remote radio head (RRH), a remote radio equipment (RRE), or a remote radio unit (RRU).

11. The computer program of claim 1, further comprising:
receiving a second RRC connection message from the second wireless device at the first wireless before the expiration of the RRC resource parameter retention timer, wherein the selected RRC parameter of the second RRC connection message has a different value than the selected RRC parameter saved in the memory; and
replacing the selected RRC parameter saved in the memory with the selected RRC parameter of the second RRC connection message.

12. The computer program of claim 1, wherein the reduced RRC connection message further excludes a plurality of selected RRC parameters, and wherein the instruction to transmit the reduced RRC connection message from the first wireless device to the second wireless device further includes an included selected RRC parameter in the reduced RRC connection message when the included selected RRC parameter changes, wherein at least one other selected RRC parameter is excluded from the reduced RRC connection message.

13. The computer program of claim 2, further comprising:
transmitting an RRC connection failed message from the first wireless device to the second wireless device when the reduced RRC connection message is received and the RRC resource parameter retention timer is expired.

14. A radio resource controller for reducing signaling overhead during radio resource control (RRC) state transitions, comprising:
a RRC transceiver module configured to obtain a selected RRC parameter from an RRC connection message used to connect a first wireless device with a second wireless device, wherein the selected RRC parameter is identified based on a low frequency in which the selected RRC parameter changes (510);
a memory module configured to save the selected RRC parameter; and
a RRC resource parameter retention timer configured to count a retention time duration for using the selected RRC parameter saved in the memory (520),
wherein the RRC transceiver module is further configured to generate a reduced RRC connection message for communication between the first wireless device and the second wireless device when the RRC resource parameter retention timer is not expired, wherein the reduced RRC connection message excludes the selected RRC parameter (530).

15. The radio resource controller of claim 14, wherein the RRC resource parameter retention timer is configured to:
reset the RRC resource parameter retention timer after an RRC connection (212).

## Patentansprüche

1. Computerprogramm, das Computerprogrammcodemittel umfasst, die ausgelegt sind, ein Verfahren (500) zum Reduzieren eines Signalisierungsaufwands während Funkbetriebsmittelsteuerungszustandsübergängen (RRC-Zustandsübergängen) auszuführen, das Folgendes umfasst:
Speichern eines ausgewählten RRC-Parameters in einem Speicher in einer ersten drahtlosen Vorrichtung, wobei der ausgewählte RRC-Parameter anhand einer niedrigen Frequenz, mit der sich der ausgewählte RRC-Parameter ändert, identifiziert wird (510);
Einstellen eines RRC-Betriebsmittelparameterrückhaltezeitgebers, um eine Speicherungszeitdauer für die Verwendung des in dem Speicher gespeicherten ausgewählten RRC-Parameters zu zählen (520); und
Senden einer reduzierten RRC-Verbindungsnachricht von der ersten drahtlosen Vorrichtung an eine zweite drahtlose Vorrichtung, wenn der RRC-Betriebsmittelparameterrückhaltezeitgeber nicht abgelaufen ist, wobei die reduzierte RRC-Verbindungsnachricht den ausgewählten RRC-Parameter ausschließt (530).

2. Computerprogramm, das Computerprogrammcodemittel umfasst, die ausgelegt sind, ein Verfahren (600) zum Reduzieren eines Signalisierungsaufwands während Funkbetriebsmittelsteuerungszustandsübergängen (RRC-Zustandsübergängen) auszuführen, das Folgendes umfasst:
Speichern eines ausgewählten RRC-Parameters in einem Speicher in einer ersten drahtlosen Vorrichtung, wobei der ausgewählte RRC-Parameter anhand einer niedrigen Frequenz, mit der sich der ausgewählte RRC-Parameter ändert, identifiziert wird (610);
Einstellen eines RRC-Betriebsmittelparameterrückhaltezeitgebers, um eine Speicherungszeitdauer für die Verwendung des in dem Speicher gespeicherten ausgewählten RRC-Parameters zu zählen (620); und
Empfangen einer reduzierten RRC-Verbindungsnachricht von der zweiten drahtlosen Vorrichtung bei der ersten drahtlosen Vorrichtung, wobei die reduzierte RRC-Verbindungsnachricht den ausgewählten RRC-Parameter ausschließt (630);
Verwenden des in dem Speicher gespeicherten ausgewählten RRC-Parameters für den in der reduzierten RRC-Verbindungsnachricht ausgeschlossenen RRC-Parameter, wenn der RRC-Betriebsmittelparameterrückhaltezeitgeber nicht abgelaufen ist, wobei der ausgewählte RRC-Parameter in einem RRC-Verbindungsprotokoll verwendet wird (640).

3. Computerprogramm nach Anspruch 1 oder 2, wobei der ausgewählte RRC-Parameter aus einer vorherigen RRC-Verbindungsnachricht erhalten wird, die verwendet wird, um die erste drahtlose Vorrichtung mit der zweiten drahtlosen Vorrichtung zu verbinden.

4. Computerprogramm nach Anspruch 3, wobei:
die vorherige RRC-Verbindungsnachricht durch die erste drahtlose Vorrichtung für eine Kommunikation mit der zweiten drahtlosen Vorrichtung erzeugt wird; oder
die vorherige RRC-Verbindungsnachricht durch die erste drahtlose Vorrichtung von der zweiten drahtlosen Vorrichtung empfangen wird.

5. Computerprogramm nach Anspruch 1 oder 2, wobei ein Ruhezustand in der ersten drahtlosen Vorrichtung in der Kommunikation mit der zweiten drahtlosen Vorrichtung zwischen der Anweisung, den ausgewählten RRC-Parameter in dem Speicher zu speichern, und der Anweisung, die reduzierte RRC-Verbindungsnachricht zu senden, auftritt.

6. Computerprogramm nach Anspruch 1 oder 2, das ferner Folgendes umfasst:
Zurücksetzen des RRC-Betriebsmittelparameter-rückhaltezeitgebers nach einer RRC-Verbindung (212).

7. Computerprogramm nach Anspruch 1, das ferner Folgendes umfasst:
Senden der Speicherungszeitdauer an die zweite drahtlose Vorrichtung.

8. Computerprogramm nach Anspruch 2, das ferner Folgendes umfasst:
Empfangen der Speicherungszeitdauer von der zweiten drahtlosen Vorrichtung.

9. Computerprogramm nach Anspruch 1 oder 2, wobei:
der ausgewählte RRC-Parameter aus der Gruppe ausgewählt ist, die aus einem diskontinuierlichen Empfangsparameter (DRX-Parameter), einer Größe eines Zwischenspeicherzustandsberichts (BSR), einer Frequenz des BSR, Signalisierungsfunkträger-0-Informationen (SRB0-Inforamtionen), SRB1-Informationen, SRB2,-Informationen, SRB3-Informationen oder einem angepassten Sendeleistungspegel besteht; oder
die reduzierte RRC-Verbindungsnachricht und die RRC-Verbindungsnachricht aus der Gruppe ausgewählt sind, die aus einer RRC-Verbindungsanfrage, einem RRC-Verbindungseinrichten, einem RRC-Verbindungseinrichtenabgeschlossen, einer RRC-Verbindungsumkonfiguration oder einer RRC-Verbindungsumkonfiguration-abgeschlossen besteht.

10. Computerprogramm nach Anspruch 1 oder 2, wobei die erste drahtlose Vorrichtung aus der Gruppe ausgewählt ist, die aus einem Anwendergerät (UE) und einer Mobilstation (MS) besteht, wobei die erste drahtlose Vorrichtung konfiguriert ist, mit einem drahtlosen Lokalbereichsnetz (WLAN) und/oder einem drahtlosen persönlichen Bereichsnetz (WPAN) und/oder einem drahtlosen Großraumnetz (WWAN) verbunden zu sein und wobei die erste drahtlose Vorrichtung eine Antenne, einen berührungsempfindlichen Anzeigeschirm, einen Lautsprecher, ein Mikrofon, einen Graphikprozessor, einen Anwendungsprozessor, einen internen Speicher oder einen nicht flüchtigen Speicheranschluss enthält und die zweite drahtlose Vorrichtung aus der Gruppe ausgewählt ist, die aus einem entwickelten Knoten-B (eNodeB), einer Basisstaion (BS), einem makroentwickelten Knoten-B (macro-eNB), einem Knoten mit geringer Leistung (LPN), einem micro-eNB, einem pico-eNB, einem femto-eNB, einem Heim-eNB (HeNB), einer Basisbandeinheit (BBU), einem entfernten Funkkopf (RRH), einem entfernten Funkgerät (RRE) oder einer entfernten Funkeinheit (RRU) besteht.

11. Computerprogramm nach Anspruch 1, das ferner Folgendes umfasst:
Empfangen einer zweiten RRC-Verbindungsnachricht von der zweiten drahtlosen Vorrichtung bei der ersten drahtlosen vor dem Ablaufen des RRC-Betriebsmittelparameterrückhaltezeitgebers, wobei der ausgewählte RRC-Parameter der zweiten RRC-Verbindungsnachricht einen anderen Wert als der in dem Speicher gespeicherte RRC-Parameter besitzt; und
Ersetzen des in dem Speicher gespeicherten RRC-Parameters durch den ausgewählten RRC-Parameter der zweiten RRC-Verbindungsnachricht.

12. Computerprogramm nach Anspruch 1, wobei die reduzierte RRC-Verbindungsnachricht ferner mehrere ausgewählte RRC-Parameter ausschließt und wobei die Anweisung, die reduzierte RRC-Verbindungsnachricht von der ersten drahtlosen Vorrichtung an die zweite drahtlose Vorrichtung zu senden, ferner einen eingeschlossenen ausgewählten RRC-Parameter in der reduzierten RRC-Verbindungsnachricht enthält, wenn sich der eingeschlossene ausgewählte RRC-Parameter ändert, wobei mindestens ein anderer RRC-Parameter aus der reduzierten RRC-Verbindungsnachricht ausgeschlossen ist.

13. Computerprogramm nach Anspruch 2, das ferner Folgendes umfasst:
Senden einer RRC-Verbindungsfehler-Nachricht von der ersten drahtlosen Vorrichtung an die zweite drahtlose Vorrichtung, wenn die reduzierte RRC-Verbindungsnachricht empfangen wird und der RRC-Betriebsmittelparameterrückhaltezeitgeber abgelaufen ist.

14. Funkbetriebsmittelsteuerungseinheit zum Reduzieren eines Signalisierungsaufwands während Funkbetriebsmittelsteuerungszustandsübergängen (RRC-Zustandsübergängen), die Folgendes umfasst:
ein RRC-Sendeempfängermodul, das konfiguriert ist, einen ausgewählten RRC-Parameter aus einer RRC-Verbindungsnachricht zu erhalten, die verwendet wird, um eine erste drahtlose Vorrichtung mit einer zweiten drahtlosen Vorrichtung zu verbinden, wobei der ausgewählte RRC-Parameter anhand einer niedrigen Frequenz, mit der sich der ausgewählte RRC-Parameter ändert, identifiziert wird (510);
ein Speichermodul, das konfiguriert ist, den ausgewählten RRC-Parameter zu speichern; und
einen RRC-Betriebsmittelparameterrückhaltezeitgeber, der konfiguriert ist, eine Speicherungszeitdauer für die Verwendung des in dem Speicher gespeicherten ausgewählten RRC-Parameters zu zählen (520),
wobei das RRC-Sendeempfängermodul ferner konfiguriert ist, eine reduzierte RRC-Verbindungsnachricht für eine Kommunikation zwischen der ersten drahtlosen Vorrichtung und der zweiten drahtlosen Vorrichtung zu erzeugen, wenn der RRC-Betriebsmittelparameterrückhaltezeitgeber nicht abgelaufen ist, wobei die reduzierte RRC-Verbindungsnachricht den ausgewählten RRC-Parameter ausschließt (530).

15. Funkbetriebsmittelsteuerungseinheit nach Anspruch 14, wobei der RRC-Betriebsmittelparameterrückhaltezeitgeber konfiguriert ist:
den RRC-Betriebsmittelparameterrückhaltezeitgeber nach einer RRC-Verbindung zurückzusetzen (212).

## Revendications

1. Programme informatique comprenant un moyen de code de programme informatique adapté pour effectuer un procédé (500) pour réduire le surdébit de signalisation au cours de transitions d'état de commandes de ressources radio (RRC), comprenant :
la sauvegarde d'un paramètre RRC sélectionné dans une mémoire sur un premier dispositif sans fil, dans lequel le paramètre RRC sélectionné est identifié en fonction d'une basse fréquence en laquelle le paramètre RRC sélectionné change (510),
le réglage d'une temporisation de retenue de paramètre de ressource RRC pour compter une durée de temps de retenue pour l'utilisation du paramètre RRC sélectionné sauvegardé dans la mémoire (520) ; et
la transmission d'un message de connexion RRC réduite par le premier dispositif sans fil à un second dispositif sans fil quand la temporisation de retenue de paramètre de ressource RRC n'est pas arrivée à expiration, le message de connexion RRC réduite excluant le paramètre RRC sélectionné (530).

2. Programme informatique comprenant un moyen de code de programme informatique adapté pour effectuer un procédé (600) pour réduire le surdébit de signalisation au cours de transitions d'état de commandes de ressources radio (RRC), comprenant :
la sauvegarde d'un paramètre RRC sélectionné dans une mémoire sur un premier dispositif sans fil, dans lequel le paramètre RRC sélectionné est identifié en fonction d'une basse fréquence en laquelle le paramètre RRC sélectionné change (610),
le réglage d'une temporisation de retenue de paramètre de ressource RRC pour compter une durée de temps de retenue pour l'utilisation du paramètre RRC sélectionné sauvegardé dans la mémoire (620) ; et
la réception d'un message de connexion RRC réduite depuis un second dispositif sans fil dans le premier dispositif sans fil, le message de connexion RRC réduite excluant le paramètre RRC sélectionné (630) ;
l'utilisation du paramètre RRC sélectionné sauvegardé dans la mémoire à la place du paramètre RRC exclu dans le message de connexion RRC réduite quand la temporisation de retenue de paramètre de ressource RRC n'est pas arrivée à expiration, le paramètre RRC sélectionné étant utilisé dans un protocole de connexion RRC (640).

3. Programme informatique selon la revendication 1 ou 2, dans lequel le paramètre RRC sélectionné est obtenu à partir d'un message de connexion RRC antérieur utilisé pour connecter le premier dispositif sans fil au second dispositif sans fil.

4. Programme informatique selon la revendication 3, dans lequel :
le message de connexion RRC antérieur est généré par le premier dispositif sans fil pour la communication avec le second dispositif sans fil ; ou
le message de connexion RRC antérieur est reçu par le premier dispositif sans fil depuis le second dispositif sans fil.

5. Programme informatique selon la revendication 1 ou 2, dans lequel un état inactif intervient sur le premier dispositif sans fil en communication avec le second dispositif sans fil entre l'instruction de sauvegarder le paramètre RRC sélectionné dans la mémoire et l'instruction de transmettre le message de connexion RRC réduite.

6. Programme informatique selon la revendication 1 ou 2, comprenant en outre :
la remise à zéro de la temporisation de retenue de paramètre de ressource RRC après une connexion RRC (212) .

7. Programme informatique selon la revendication 1, comprenant en outre :
la transmission de la durée de temps de retenue au second dispositif sans fil.

8. Programme informatique selon la revendication 2, comprenant en outre :
la réception de la durée de temps de retenue depuis le second dispositif sans fil.

9. Programme informatique selon la revendication 1 ou 2, dans lequel :
le paramètre RRC sélectionné est sélectionné dans le groupe consistant en un paramètre de réception discontinue (DRX), une taille d'un rapport d'état de tampon (BSR), une fréquence du rapport BSR, une information de support radio de signalisation 0 (SRB0), une information SRB1, une information SRB2, une information SRB3, ou un niveau de puissance d'émission ajusté ; ou
le message de connexion RRC réduite et le message de connexion RRC sont sélectionnés dans le groupe consistant en une requête de connexion RRC, un établissement de connexion RRC, un établissement de connexion RRC terminé, une reconfiguration de connexion RRC, ou une reconfiguration de connexion RRC terminée.

10. Programme informatique selon la revendication 1 ou 2, dans lequel le premier dispositif sans fil est sélectionné dans le groupe consistant en un équipement utilisateur (UE) et une station mobile (MS), dans lequel le premier dispositif sans fil est configuré pour se connecter à au moins l'un d'un réseau local sans fil (WLAN), d'un réseau personnel sans fil (WPAN), et d'un réseau étendu sans fil (WWAN), et dans lequel le premier dispositif sans fil comporte une antenne, un écran d'affichage tactile, un haut-parleur, un microphone, un processeur graphique, un processeur d'application, une mémoire interne, ou un port de mémoire rémanente, et le second dispositif sans fil est sélectionné dans le groupe consistant en un noeudB évolué, (eNodeB), une station de base (BS), un macro noeudB évolué (macro-eNB), un noeud basse puissance (LPN), un micro-eNB, un pico-eNB, un femto-eNB, un eNB de rattachement (HeNB), une unité de bande de base (BBU), un récepteur radio distant (RRH), un équipement radio distant (RRE), ou une unité radio distante (RRU).

11. Programme informatique selon la revendication 1, comprenant en outre :
la réception d'un second message de connexion RRC depuis le second dispositif sans fil dans le premier sans fil avant l'expiration de la temporisation de retenue de paramètre de ressource RRC, dans lequel le paramètre RRC sélectionné du second message de connexion RRC a une valeur différente de celle du paramètre RRC sauvegardé dans la mémoire ; et
le remplacement du paramètre RRC sauvegardé dans la mémoire par le paramètre RRC sélectionné du second message de connexion RRC.

12. Programme informatique selon la revendication 1, dans lequel le message de connexion RRC réduite exclut en outre une pluralité de paramètres RRC sélectionnés, et dans lequel l'instruction de transmission du message de connexion RRC réduite par le premier dispositif sans fil au second dispositif sans fil comporte en outre un paramètre RRC sélectionné inclus dans le message de connexion RRC réduite quand le paramètre RRC sélectionné inclus change, dans lequel au moins un autre paramètre RRC sélectionné est exclu du message de connexion RRC réduite.

13. Programme informatique selon la revendication 2, comprenant en outre :
la transmission d'un message d'échec de connexion RRC par le premier dispositif sans fil au second dispositif sans fil quand le message de connexion RRC réduite est reçu alors que la temporisation de retenue de paramètre de ressource RRC est arrivée à expiration.

14. Contrôleur de ressources radio pour réduire le surdébit de signalisation au cours de transitions d'état de commandes de ressources radio (RRC), comprenant :
un module d'émetteur-récepteur RRC configuré pour obtenir un paramètre RRC sélectionné depuis un message de connexion RRC utilisé pour connecter un premier dispositif sans fil à un second dispositif sans fil, dans lequel le paramètre RRC sélectionné est identifié en fonction d'une fréquence basse en laquelle le paramètre RC sélectionné change (510) ;
un module de mémoire configuré pour sauvegarder le paramètre RRC sélectionné ; et
une temporisation de retenue de paramètre de ressource RRC configurée pour compter une durée de temps de retenue pour l'utilisation du paramètre RRC sélectionné sauvegardé dans la mémoire (520) ;
dans lequel le module d'émetteur-récepteur RRC est configuré en outre pour générer un message de connexion RRC réduite destiné à être communiqué entre le premier dispositif sans fil et le second dispositif sans fil quand la temporisation de retenue de paramètre de ressource RRC n'est pas arrivée à expiration, le message de connexion RRC réduite excluant le paramètre RRC sélectionné (530).

15. Contrôleur de ressources radio selon la revendication 14, dans lequel la temporisation de retenue de paramètre de ressource RRC est configurée pour :
être remise à zéro après une connexion RRC (212).
